# EUROPEAN PATENT SPECIFICATION

(11) **EP 3 848 435 B1**
(45) Date of publication and mention of the grant of the patent: **22.04.2026**
(21) Application number: 21150569.8
(22) Date of filing: 07.01.2021
(51) Int. Cl.: C09K 5/10, C23F 11/18

(54) **HEAT PIPE WORKING MEDIUM, PREPARATION METHOD THEREOF, AND USE THEREOF**
WÄRMEROHRARBEITSMEDIUM, HERSTELLUNGSVERFAHREN DAFÜR UND VERWENDUNG DAVON
MILIEU DE TRAVAIL DE CALODUC, SON PROCÉDÉ DE PRÉPARATION ET SON UTILISATION

(30) Priority: 10.01.2020 CN 202010026437
(43) Date of publication of application: 14.07.2021
(73) Proprietor: Viessmann Holding International GmbH, 35108 Allendorf (Eder) (DE)
(72) Inventor: MA, Jie, Dachang County, Hebei 065300 (CN); TAN, Ning, Dachang County, Hebei 065300 (CN); MA, Xuming, Dachang County, Hebei 065300 (CN); WANG, Kai, Dachang County, Hebei 065300 (CN); YANG, Biao, Dachang County, Hebei 065300 (CN); YIN, Hongjuan, Dachang County, Hebei 065300 (CN)
(74) Representative: Wolf & Wolf Patentanwaltsgesellschaft mbH

(56) References cited:
- US-A1- 2006 042 786
- US-A1- 2014 090 817
- US-A1- 2018 057 726

## Description

### CROSS-REFERENCE TO RELATED APPLICATIONS

This application claims priority to Chinese Patent Application No. 202010026437.8, filed on January 10, 2020.

### TECHNICAL FIELD

The present invention belongs to the field of heat utilization and relates to a solar heat pipe with a heat pipe working medium.

### BACKGROUND

A solar gravity heat pipe is academically referred to as a "two-phase closed thermosiphon" and simply referred to as a "thermosiphon". A copper pipe is vacuumed and filled with a certain amount of working fluid. The fluid repeatedly circulates inside the copper pipe through a phase transition process of evaporation-condensation and continuously transfers heat from an evaporation section to a condensation section, thus completing a heat transfer process.

Common heat pipe working medium, such as water, is easy to produce non-condensable gases such as H₂ and, when used for a long term, will cause part of the heat pipe not to work and greatly reduce heat transfer efficiency. The existing working media for moderate- and high-temperature heat pipes, such as mercury, cesium, potassium and sodium, are difficult to popularize on a large scale due to higher price thereof and a more complicated process of manufacturing heat pipes using these working media. Some organic substances, which are recently developed as heat pipe working media, have less thermal conductivity coefficient and low thermal efficiency. In addition, the above working media have strict requirements on the materials of the heat pipes, which limit their use.

The working media for solar heat pipes generally contain highly toxic substances and thus are restricted in some countries and regions. Therefore, the working medium is expected to be environmentally friendly and meet relevant approval requirements based on the premise of ensuring antifreeze effect and compatibility.

In addition, the compatibility of a working medium with the main material of the heat pipe needs to be taken into account. Only when this condition is met, can the service life of the heat pipe be guaranteed, so that the heat pipe works stably for a long time. Moreover, the working medium needs to have certain stability and maintain the properties of original components at high temperatures. If these conditions are not met, the heat pipe will see deteriorated functioning and even stop functioning in a severe case.

A solar heat pipe with a heat pipe working medium according to the preamble of claim 1 is known from the document US 2018/057726 A1.

CN1102200 has disclosed a heat pipe working medium composed of inorganic materials, which is characterized in that the working medium contains the following components: potassium bichromate, lithium carbonate, sodium peroxyborate, boric acid, aluminum hydroxide, sodium peroxide, manganese dioxide, cobaltic oxide, and lead tetroxide. The working medium has the following advantage: since the working medium is composed of inorganic substances according to a certain composition and conducts heat relying on the movement of inorganic molecules, chemical materials undergo physical changes when driven by a heat source of above 60 °C to 70 °C to generate energy and then release heat. Therefore, the working medium has high thermal conductivity, high heat conduction efficiency, fatigue resistance, and low internal pressure and is widely applicable and not corrosive to metal materials.

However, the solution requires the use of potassium bichromate which has been banned in many countries and regions due to its high toxicity. Therefore, the solution cannot be promoted.

CN110358507A has disclosed a heat exchange working medium for a heat collecting pipe, the heat collecting pipe, and a filling method. The heat exchange working medium includes a liquid working medium and solid nanoparticles uniformly dispersed in the liquid working medium to form a solid-liquid mixed suspension. The heat collecting pipe includes a condensing end, a ring-shaped sealing port, a vacuum interlayer, a cover glass pipe, an inner pipe, a solid nanoparticle coating for adsorbing the liquid working medium, a selective absorption coating and the heat exchange working medium. The filling method includes: filling a solid-liquid mixed heat exchange working medium into the inner cavity of the inner pipe from the condensing end by using a vacuum exhaust filling method, and periodically rotating and flipping the heat collecting pipe.

This solution requires the use of nanomaterials, increasing production costs and the burden of an enterprise, and is not suitable for large-scale promotion in the industry.

CN104119839A has disclosed a method for determining a mixed working medium for phase transition heat transfer of a pulsating heat pipe. The method includes five basic conditions: (1) two working media are mutually insoluble or mutually soluble partially and can still be layered after being mixed; (2) the boiling point of working medium I is 5-80 °C higher than the boiling point of working medium II; (3) the density of working medium I is 20-98% of the density of working medium II; (4) the specific heat capacity of working medium I is 1.1-10 times the specific heat capacity of working medium II; (5) the phase transition latent heat of working medium I is 1.1-10 times the phase transition latent heat of working medium II. Thus, the mass fraction of the high boiling working medium and of the low boiling working medium in the mixed working medium is determining to be 5%-95% and 95%-5% respectively, and preferably 30-70% and 70%-30%.

However, this solution has not expressly indicated which component can be used for avoiding highly toxic substances in the existing heat pipe working media while achieving similar technical effects.

CN108485612A has disclosed a method for preparing a mixed nanofluid working medium for heat transfer of a heat pipe which belongs to the field of heat exchange. The method includes: selecting particles with a particle size of 20 nm at volume ratios of 75% Al₂O₃+25% TiO₂, 50% Al₂O₃+50% TiO₂, or 25% Al₂O₃+75% TiO₂ as additives and deionized water as a base solution, adding a surfactant, and performing magnetic stirring and ultrasonic vibration, to prepare a mixed nanofluid as a heat transfer working medium of the heat pipe, where the mixture of nanoparticles of 75% Al₂O₃+25% TiO₂, 50% Al₂O₃+50% TiO₂, or 25% Al₂O₃+75% TiO₂ is added at a volume percentage of 2%.

However, this solution requires the use of nanomaterials, increasing production costs and thus the burden of an enterprise. Moreover, the thermal conductivity, anti-freeze effect, and anti-aging property of the mixed nanofluid working medium are to be further improved.

Further prior art is also known from US 2014/090817 A1 and US 2006/042786 A1.

### SUMMARY

In view of the above-mentioned defects in the related art, the present invention aims to provide a solar heat pipe with a heat pipe working medium. The solar heat pipe with a heat pipe working medium (working medium for heat pipe) provided by the present invention can be environmentally friendly while meeting relevant approval requirements, based on the premise of ensuring antifreeze effect and compatibility.

To achieve the object, the present invention adopts solutions described below.

In a first aspect, the present invention provides a solar heat pipe with a heat pipe working medium including a corrosion inhibitor, an acid-base balancing agent, and a solvent, where the corrosion inhibitor includes a phosphate and a molybdate.

In the solar heat pipe with a heat pipe working medium provided by the present invention, the phosphate and the molybdate are used as corrosion inhibitors to avoid the use of components that do not meet environmental protection requirements, ensuring that the solar heat pipe with a heat pipe working medium provided by the present invention can meet the relevant approval requirements without sacrificing the antifreeze effect and compatibility of the solar heat pipe with a heat pipe working medium provided by the present invention.

The preferred solutions of the present invention are set forth below and not intended to limit the solutions of the present invention. The technical objects and beneficial effects of the present invention can be better achieved through the preferred solutions set forth below.

As a preferred solution of the present invention, the phosphate includes zinc phosphate. Preferably, the molybdate includes sodium molybdate and/or potassium molybdate.

As a preferred solution of the present invention, the corrosion inhibitor is a combination of zinc phosphate and sodium molybdate.

Preferably, the heat pipe is a copper pipe.

In the present invention, the combination of zinc phosphate and sodium molybdate is used as the corrosion inhibitor with the advantages that both molybdic acid and phosphoric acid are weakly acidic and the compounds will not cause electrochemical corrosion.

As a preferred solution of the present invention, the acid-base balancing agent includes an acid and a base.

Preferably, the acid includes phosphoric acid.

Preferably, the base includes sodium hydroxide.

Preferably, the acid-base balancing agent further includes an amphoteric hydroxide.

Preferably, the amphoteric hydroxide includes aluminum hydroxide.

Preferably, the acid-base balancing agent is a combination of phosphoric acid, sodium hydroxide, and aluminum hydroxide.

In the present invention, the combination of phosphoric acid, sodium hydroxide, and aluminum hydroxide is used as the acid-base balancing agent with the advantages that aluminum hydroxide is alkalescence and no new anode ions will be generated after sodium hydroxide and phosphoric acid are balanced.

As a preferred solution of the present invention, the solvent includes water.

Preferably, the water is deionized water.

As a preferred solution of the present invention, the solar heat pipe with a heat pipe working medium includes phosphoric acid, zinc phosphate, sodium hydroxide, aluminum hydroxide, sodium molybdate, and water.

Preferably, the solar heat pipe with a heat pipe working medium comprises, based on and in addition to 100 parts by weight of water, the following components in parts by weight: 0.1-0.4 parts of phosphoric acid, 0.1-0.3 parts of zinc phosphate, 0.2-0.5 parts of sodium hydroxide, 0.1-0.4 parts of aluminum hydroxide, and 0.1-0.4 parts of sodium molybdate.

In the present invention, based on 100 parts by weight of water, 0.1-0.4 parts (for example, 0.1 parts, 0.2 parts, 0.3 parts, or 0.4 parts, etc.) of phosphoric acid are included, but it is not limited to the listed values and other unlisted values within the value range are also applicable; 0.1-0.3 parts (for example, 0.1 parts, 0.15 parts, 0.2 parts, 0.25 parts, or 0.3 parts, etc.) of zinc phosphate are included, but it is not limited to the listed values and other unlisted values within the value range are also applicable; 0.2-0.5 parts (for example, 0.2 parts, 0.3 parts, 0.4 parts, or 0.5 parts, etc.) of sodium hydroxide are included, but it is not limited to the listed values and other unlisted values within the value range are also applicable; 0.1-0.4 parts (for example, 0.1 parts, 0.2 parts, 0.3 parts, or 0.4 parts, etc.) of aluminum hydroxide are included, but it is not limited to the listed values and other unlisted values within the value range are also applicable; 0.1-0.4 parts (for example, 0.1 parts, 0.2 parts, 0.3 parts, or 0.4 parts, etc.) of sodium molybdate are included, but it is not limited to the listed values and other unlisted values within the value range are also applicable.

As a preferred solution of the present invention, the solar heat pipe with a heat pipe working medium comprises, based on and in addition to 100 weight parts of water, the following components in parts by weight: 0.2-0.3 parts of phosphoric acid, 0.1-0.2 parts of zinc phosphate, 0.3-0.4 parts of sodium hydroxide, 0.2-0.3 parts of aluminum hydroxide, and 0.2-0.3 parts of sodium molybdate.

Compared with the related art, the present invention has beneficial effects below.

The solar heat pipe with a heat pipe working medium provided by the present invention can be environmentally friendly, meets the relevant approval requirements, and has good thermal conductivity, based on the premise of ensuring antifreeze effect and compatibility. The average maximum amount of heat transfer of the heat pipe using the heat pipe working fluid provided by the present invention can reach 241.18 W.

### BRIEF DESCRIPTION OF DRAWINGS

FIG. 1 is a metallographic analysis diagram of a solar heat pipe using a heat pipe working medium provided by Example 1 of the present invention after an aging test.
FIG. 2 is a picture illustrating pH test results of a solar heat pipe using a heat pipe working medium provided by Example 1 of the present invention after an aging test.

### DETAILED DESCRIPTION

To better illustrate the present invention and facilitate the understanding of the solutions of the present invention, the present invention is further described in detail below. The examples described below are merely simple examples of the present invention and not intended to represent or limit the scope of the present invention. The scope of the present invention is defined by the claims.

Typical but non-restrictive examples of the present invention are described below.

### Example 1

This example provides a solar heat pipe with a heat pipe working medium, which comprises, based on and in addition to 100 weight parts of deionized water, the following components in parts by weight: 0.25 parts of phosphoric acid, 0.15 parts of zinc phosphate, 0.35 parts of sodium hydroxide, 0.25 parts of aluminum hydroxide, and 0.25 parts of sodium molybdate.

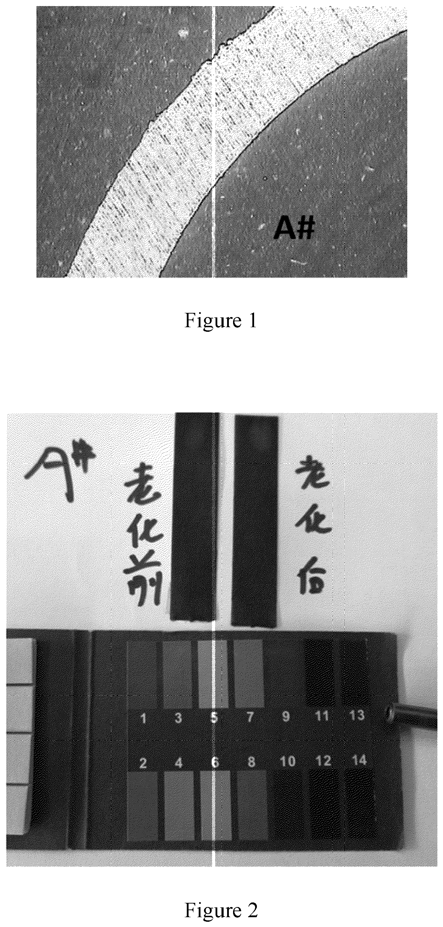

The heat pipe working medium provided in this example was placed into a heat pipe for an aging test (see a test method section for a specific experimental method). The metallographic analysis result is shown in FIG. 1. It can be seen from FIG. 1 that the interior of a copper pipe is not corroded, which proves good compatibility of the heat pipe working medium with the copper pipe.

The heat pipe working medium provided in this example was placed into the heat pipe for the aging test (see the test method section for the specific experimental method). The pH test result is shown in FIG. 2, wherein the pre-aging pH was showed on the left and the post-aging pH was showed on the right. It can be seen from FIG. 2 that the working medium prepared according to the formula has excellent thermal stability.

The performance test result of the heat pipe working medium provided in this example is shown in Table 1.

### Example 2

This example provides a solar heat pipe with a heat pipe working medium which comprises, based on and in addition to 100 weight parts of deionized water, the following components in parts by weight: 0.2 parts of phosphoric acid, 0.1 parts of zinc phosphate, 0.4 parts of sodium hydroxide, 0.3 parts of aluminum hydroxide, and 0.2 parts of sodium molybdate.

The performance test result of the heat pipe working medium provided in this example is shown in Table 1.

### Example 3

This example provides a solar heat pipe with a heat pipe working medium, which comprises, based on and in addition to 100 weight parts of deionized water, the following components in parts by weight: 0.3 parts of phosphoric acid, 0.2 parts of zinc phosphate, 0.3 parts of sodium hydroxide, 0.2 parts of aluminum hydroxide, and 0.3 parts of potassium molybdate.

The performance test result of the heat pipe working medium provided in this example is shown in Table 1.

### Example 4

This example provides a solar heat pipe with a heat pipe working medium, which comprises, based on and in addition to 100 weight parts of deionized water, the following components in parts by weight: 0.1 parts of phosphoric acid, 0.3 parts of zinc phosphate, 0.2 parts of sodium hydroxide, 0.1 parts of aluminum hydroxide, and 0.4 parts of sodium molybdate.

The performance test result of the heat pipe working medium provided in this example is shown in Table 1.

### Example 5

This example provides a solar heat pipe with a heat pipe working medium, which comprises, based on and in addition to 100 weight parts of deionized water, the following components in parts by weight: 0.4 parts of phosphoric acid, 0.1 parts of zinc phosphate, 0.5 parts of sodium hydroxide, 0.4 parts of aluminum hydroxide, and 0.1 parts of sodium molybdate.

The performance test result of the heat pipe working medium provided in this example is shown in Table 1.

### Comparative example 1

In this comparative example, except that the heat pipe working medium contains no zinc phosphate, other materials and their mass contents are the same as those of the heat pipe working medium provided in Example 1.

The performance test result of the heat pipe working medium provided in this comparative example is shown in Table 1.

### Comparative example 2

In this comparative example, except that the heat pipe working medium contains no sodium molybdate, other materials and their mass contents are the same as those of the heat pipe working medium provided in Example 1.

The performance test result of the heat pipe working medium provided in this comparative example is shown in Table 1.

### Test Method

The heat pipe working media provided in the examples and comparative examples were separately placed into copper heat pipes which were tested.

### Antifreeze Test of Heat Pipes

According to the GB/T 24767-2009 heat pipe antifreeze test method, the heat pipes were positioned in a refrigerating device of -25 °C or lower at an inclination angle greater than 30° for 1 h, then taken out and placed in water of 60 °C or higher with a depth of 200 mm or greater, and 5 minutes after started, the heat pipes were put in a refrigerating device of 25 °C or lower.

These steps were repeated 10 times. The heat pipes should be free of freeze damages and have no defects affecting uses such as trachoma, cracks, depressions, or rust on their surfaces. Whether the outer diameter of each heat pipe expands was measured before and after the test, separately.

### Test of Maximum Heat Transfer Flow for Heat Pipes

According to the GB/T 24767-2009 test method for maximum heat transfer flow of heat pipes, the evaporation section of the heat pipe was horizontally placed in a heating chamber and a heat exchange water jacket was added outside its condensing end for connecting a constant temperature water bath. Once the water temperature at an inlet and the water temperature at an outlet of the water jacket were the same and the temperature at all temperature measurement points of an evaporation pipe was substantially the same, heating power was gradually increased.

With the heating power increased, if the temperature of a local part of the evaporation section significantly increased or the temperature significantly oscillated and became unstable, the heat pipe was deemed to have reached a heat transfer limit at the operating temperature in the test state.

The formula for calculating the maximum heat flow is Q1 = G * cp (t2-t1), where Q1 denotes a heat flow obtained from a cooling medium in watts (W), G denotes a mass flow rate of the cooling medium in kilograms per second (kg/s), cp denotes specific heat of the cooling medium in Joule per kilogram per degree Celsius [J(kg°C)], t1 denotes the temperature of the cooling medium at the inlet in degree Celsius (°C), and t2 denotes the temperature of the cooling medium at the outlet in degree Celsius (°C).

### Aging Test of Heat Pipes

The heat pipe was put into a heating chamber of an aging experimental bench and inserted into round holes between the upper and lower heating plates with the condensing end downwards. The power supply was turned on and the condensing end was slowly heated to an experimental temperature by a heating system. The temperature was increased, maintained, and decreased repeatedly (the temperature was increased to 300 °C and maintained for 4 h, and then decreased to 60 °C, and increased to 300 °C and maintained for 4 h, and decreased to 60 °C again, and the cycle was repeated within an experimental period of 2000 h) until the end of the experiment. Pictures are taken with an image detector for metallographic analysis. The pH of the heat pipe working medium was tested using a pH paper.

The test results are shown in Table 1.

**Table 1**

| | Antifreeze Test | Maximum Heat Transfer Flow Test | Aging Test | | |
|---|---|---|---|---|---|
| | | Average Maximum Heat Transfer Flow (W) | Metallographic Analysis | Pre-aging pH | Post-aging pH |
| Example 1 | No defects affecting use, no expansion of the outer diameter | 241.18 | No corrosion inside, compatible with the copper pipe | 13 | 12 |
| Example 2 | No defects affecting use, no expansion of the outer diameter | 250.1 | No corrosion inside, compatible with the copper pipe | 13 | 12 |
| Example 3 | No defects affecting use, no expansion of the outer diameter | 236.5 | No corrosion inside, compatible with the copper pipe | 13 | 12 |
| Example 4 | No defects affecting use, no expansion of the outer diameter | 233.55 | No corrosion inside, compatible with the copper pipe | 13 | 12 |
| Example 5 | No defects affecting use, no expansion of the outer diameter | 245.36 | No corrosion inside, compatible with the copper pipe | 13 | 12 |
| Comparative Example 1 | No defects affecting use, no expansion of the outer diameter | 230.4 | Corrosion | 13 | 12 |
| Comparative Example 2 | Burst of the heat pipe due to expansion | 236 | Corrosion | 13 | 12 |

It can be seen from the preceding examples and comparative examples that the solar heat pipe with a heat pipe working medium provided by the present invention can be environmentally friendly, meet relevant approval requirements, and have good thermal conductivity, based on the premise of ensuring antifreeze effect and compatibility.

Comparative Example 1 did not use a phosphate as a corrosion inhibitor, resulting in the occurrence of corrosion.

Comparative Example 2 did not use a molybdate as the corrosion inhibitor, resulting in a lack of antifreeze ability.

The applicant has stated that although the detailed process devices and flows of the present invention are described through the examples described above, the present invention is not limited to the detailed process devices and flows described above, which means that the implementation of the present invention does not necessarily depend on the detailed process devices and flows described above.

## Claims

1. A solar heat pipe with a heat pipe working medium, comprising: a corrosion inhibitor, an acid-base balancing agent, and a solvent, wherein the corrosion inhibitor comprises a phosphate and a molybdate.

2. The solar heat pipe with the heat pipe working medium according to claim 1, wherein the phosphate comprises zinc phosphate;
preferably, the molybdate comprises sodium molybdate and/or potassium molybdate.

3. The solar heat pipe with the heat pipe working medium according to claim 1 or 2, wherein the corrosion inhibitor is a combination of zinc phosphate and sodium molybdate;
preferably, the heat pipe is a copper pipe.

4. The solar heat pipe with the heat pipe working medium according to any one of claims 1 to 3, wherein the acid-base balancing agent comprises an acid and a base;
preferably, the acid comprises phosphoric acid;
preferably, the base comprises sodium hydroxide;
preferably, the acid-base balancing agent further comprises an amphoteric hydroxide;
preferably, the amphoteric hydroxide comprises aluminum hydroxide;
preferably, the acid-base balancing agent is a combination of phosphoric acid, sodium hydroxide, and aluminum hydroxide.

5. The solar heat pipe with the heat pipe working medium according to any one of claims 1 to 4, wherein the solvent comprises water; preferably, the water is deionized water.

6. The solar heat pipe with the heat pipe working medium according to any one of claims 1 to 5, wherein the heat pipe working fluid comprises phosphoric acid, zinc phosphate, sodium hydroxide, aluminum hydroxide, sodium molybdate, and water;
preferably, the heat pipe working medium comprising, based on and in addition to 100 weight parts of water, the following components in parts by weight:
0.1-0.4 parts of phosphoric acid,
0.1-0.3 parts of zinc phosphate,
0.2-0.5 parts of sodium hydroxide,
0.1-0.4 parts of aluminum hydroxide, and
0.1-0.4 parts of sodium molybdate.

7. The solar heat pipe with the heat pipe working medium according to claim 6, comprising, based on and in addition to 100 weight parts of water, the following components in parts by weight:
0.2-0.3 parts of phosphoric acid,
0.1-0.2 parts of zinc phosphate,
0.3-0.4 parts of sodium hydroxide,
0.2-0.3 parts of aluminum hydroxide, and
0.2-0.3 parts of sodium molybdate.

## Patentansprüche

1. Solarwärmerohr mit einem Wärmerohrarbeitsmedium, aufweisend: einen Korrosionsinhibitor, ein Säure-Base-Ausgleichsmittel und ein Lösungsmittel, wobei der Korrosionsinhibitor ein Phosphat und ein Molybdat aufweist.

2. Solarwärmerohr mit dem Wärmerohrarbeitsmedium nach Anspruch 1,
wobei das Phosphat Zinkphosphat aufweist;
wobei das Molybdat bevorzugt Natriummolybdat und/oder Kaliummolybdat aufweist.

3. Solarwärmerohr mit dem Wärmerohrarbeitsmedium nach Anspruch 1 oder 2,
wobei der Korrosionsinhibitor eine Kombination aus Zinkphosphat und Natriummolybdat ist;
wobei das Wärmerohr bevorzugt ein Kupferrohr ist.

4. Solarwärmerohr mit dem Wärmerohrarbeitsmedium nach einem der Ansprüche 1 bis 3,
wobei das Säure-Base-Ausgleichsmittel eine Säure und eine Base aufweist;
wobei die Säure bevorzugt Phosphorsäure aufweist;
die Base bevorzugt Natriumhydroxid aufweist;
das Säure-Base-Ausgleichsmittel ferner bevorzugt ein amphoteres Hydroxid aufweist;
das amphotere Hydroxid bevorzugt Aluminiumhydroxid aufweist;
das Säure-Base-Ausgleichsmittel bevorzugt eine Kombination aus Phosphorsäure, Natriumhydroxid und Aluminiumhydroxid ist.

5. Solarwärmerohr mit dem Wärmerohrarbeitsmedium nach einem der Ansprüche 1 bis 4,
wobei das Lösungsmittel Wasser aufweist;
das Wasser bevorzugt entionisiertes Wasser ist.

6. Solarwärmerohr mit dem Wärmerohrarbeitsmedium nach einem der Ansprüche 1 bis 5,
wobei das Wärmerohrarbeitsfluid Phosphorsäure, Zinkphosphat, Natriumhydroxid, Aluminiumhydroxid, Natriummolybdat und Wasser aufweist;
wobei das Wärmerohrarbeitsmedium basierend auf und zusätzlich zu 100 Gewichtsteilen Wasser bevorzugt die folgenden Komponenten in Gewichtsteilen aufweist:
0,1 bis 0,4 Teile Phosphorsäure,
0,1 bis 0,3 Teile Zinkphosphat,
0,2 bis 0,5 Teile Natriumhydroxid,
0,1 bis 0,4 Teile Aluminiumhydroxid und
0,1 bis 0,4 Teile Natriummolybdat.

7. Solarwärmerohr mit dem Wärmerohrarbeitsmedium nach Anspruch 6, das basierend auf und zusätzlich zu 100 Gewichtsteilen Wasser die folgenden Komponenten in Gewichtsteilen aufweist:
0,2 bis 0,3 Teile Phosphorsäure,
0,1 bis 0,2 Teile Zinkphosphat,
0,3 bis 0,4 Teile Natriumhydroxid,
0,2 bis 0,3 Teile Aluminiumhydroxid und
0,2 bis 0,3 Teile Natriummolybdat.

## Revendications

1. Caloduc solaire avec un milieu caloporteur, comprenant : un inhibiteur de corrosion, un agent d'équilibrage acido-basique et un solvant, dans lequel l'inhibiteur de corrosion comprend un phosphate et un molybdate.

2. Caloduc solaire avec un milieu caloporteur selon la revendication 1, dans lequel
le phosphate comprend du phosphate de zinc ;
de préférence, le molybdate comprend du molybdate de sodium et/ou du molybdate de potassium.

3. Caloduc solaire avec un milieu caloporteur selon la revendication 1 ou 2, dans lequel
l'inhibiteur de corrosion est une combinaison de phosphate de zinc et de molybdate de sodium ;
de préférence, le caloduc est un tuyau en cuivre.

4. Caloduc solaire avec un milieu caloporteur selon l'une quelconque des revendications 1 à 3, dans lequel
l'agent d'équilibrage acido-basique comprend un acide et une base ;
de préférence, l'acide comprend de l'acide phosphorique ;
de préférence, la base comprend de l'hydroxyde de sodium ;
de préférence, l'agent d'équilibrage acido-basique comprend en outre un hydroxyde amphotère ;
de préférence, l'hydroxyde amphotère comprend de l'hydroxyde d'aluminium ;
de préférence, l'agent d'équilibrage acido-basique est une combinaison d'acide phosphorique, d'hydroxyde de sodium et d'hydroxyde d'aluminium.

5. Caloduc solaire avec un milieu caloporteur selon l'une quelconque des revendications 1 à 4, dans lequel
le solvant comprend de l'eau ;
de préférence, l'eau est de l'eau déminéralisée.

6. Caloduc solaire avec un milieu caloporteur selon l'une quelconque des revendications 1 à 5, dans lequel
le fluide caloporteur comprend de l'acide phosphorique, du phosphate de zinc, de l'hydroxyde de sodium, de l'hydroxyde d'aluminium, du molybdate de sodium et de l'eau ;
de préférence, le milieu caloporteur comprenant, sur la base de 100 parties en masse d'eau et en outre, les composants suivants en parties en masse :
de 0,1 à 0,4 partie d'acide phosphorique,
de 0,1 à 0,3 partie de phosphate de zinc,
de 0,2 à 0,5 partie d'hydroxyde de sodium,
de 0,1 à 0,4 partie d'hydroxyde d'aluminium, et
de 0,1 à 0,4 partie de molybdate de sodium.

7. Caloduc solaire avec un milieu caloporteur selon la revendication 6, comprenant, sur la base de 100 parties en masse d'eau et en outre, les composants suivants en parties en masse :
de 0,2 à 0,3 partie d'acide phosphorique,
de 0,1 à 0,2 partie de phosphate de zinc,
de 0,3 à 0,4 partie d'hydroxyde de sodium,
de 0,2 à 0,3 partie d'hydroxyde d'aluminium, et
de 0,2 à 0,3 partie de molybdate de sodium.
